# EUROPÄISCHE PATENTSCHRIFT

(11) **EP 3 889 468 B1**
(45) Veröffentlichungstag und Bekanntmachung des Hinweises auf die Patenterteilung: **26.04.2023**
(21) Anmeldenummer: 21166589.8
(22) Anmeldetag: 01.04.2021
(51) Int. Cl.: F16H 61/42, F16H 61/46, E21B 7/02, F16H 61/47, E21B 44/00

(54) **SYSTEM ZUR STEUERUNG EINES BOHRANTRIEBS EINES SPEZIALTIEFBAUGERÄTES**
SYSTEM FOR CONTROLLING A DRILLING DRIVE OF A SPECIALISED EXCAVATION DEVICE
SYSTÈME DE COMMANDE D'UN ENTRAÎNEMENT DE FORAGE D'UN APPAREIL SPÉCIAL DE GÉNIE CIVIL

(30) Priorität: 03.04.2020 DE 202020101831 U
(43) Veröffentlichungstag der Anmeldung: 06.10.2021
(73) Patentinhaber: Liebherr-Werk Nenzing GmbH, 6710 Nenzing (AT)
(72) Erfinder: GASSNER, Christof, 6713 Ludesch (AT)
(74) Vertreter: Laufhütte, Dieter

(56) Entgegenhaltungen:
- DE-B3-102015 209 356
- GB-A- 2 106 952
- US-A1- 2017 044 832

## Beschreibung

Die Erfindung betrifft ein System zur Steuerung eines Bohrantriebs eines Spezialtiefbaugerätes umfassend wenigstens einen Hydromotor als Bohrantrieb, der über eine Bohrhydraulik mit der benötigten hydraulischen Energie versorgt ist.

Spezielle Tiefbaumaschinen ermöglichen bspw. die Gründung anspruchsvoller Bauwerke und decken die Bandbreite vom Bohren bis zum Schlitzen ab. Zu den gängigsten Bohrverfahren im Spezialtiefbau zählt heutzutage das sogenannte Kelly-Bohren, das zur Herstellung von Bohrpfählen mit großem Durchmesser dient. Die Drehbewegung des Bohrers wird durch einen Bohrantrieb erzeugt, der mittels eines Schlittens verfahrbar am Mäkler des Bohrgerätes installiert ist. Mittels der Kellystangen lässt sich der Bohrer schrittweise in das fortschreitende Bohrloch absenken. Die notwendige hydraulische Energie für den Bohrantrieb stellt eine Bohrhydraulik der Baumaschine bereit.

Ein gattungsgemäßes Bohrgerät mit einem hydraulischen Motor ist aus US 2017/044832 A1 bekannt.

Aus steuerungstechnischer Sicht ist es gewünscht, dass der Bohrantrieb im regulären Betrieb stets mit möglichst hoher Leistung arbeitet. Aus diesem Grund wird mittels geeignet Verstellmotoren die Drehzahl des Bohrantriebs im laufenden Betrieb an das aktuelle Bohrmoment angepasst. Bekannte Lösungen setzen dies durch Verwendung eines hydraulischen Druckreglers um.

Die vorliegende Erfindung beschäftigt sich mit alternativen Steuerungskonzepten, die zusätzliche Vorteile bieten.

Gelöst wird diese Aufgabe durch ein System gemäß den Merkmalen des Anspruchs 1. Vorteilhafte Ausführungen des Systems sind Gegenstand der abhängigen Ansprüche.

Erfindungsgemäß wird vorgeschlagen, das System um wenigstens ein elektronisches Steuergerät zur Ansteuerung bzw. -regelung des Bohrantriebs zu erweitern. Das Steuergerät umfasst einen Signaleingang und/oder ein Erfassungsmittels um die aktuelle Drehzahl des Bohrantriebs mittelbar oder unmittelbar zu bestimmen. Das Steuergerät kann bspw. eine geeignete Sensorik zur Drehzahlmessung aufweisen, alternativ kann das Steuergerät jedoch auch über eine Signalleitung mit einem externen Erfassungsmittel verbunden sein. Es ist ebenso nicht zwingend notwendig, die Drehzahl unmittelbar zu messen, diese könnte auch anhand passender Messgrößen abgeleitet werden. Die Drehzahl kann bspw. direkt an der Ausgangswelle des Hydromotors des Bohrantriebs erfasst werden und als Messsignal an das Steuergerät übertragen werden.

Das Steuergerät umfasst einen Befehlsspeicher, der eine Steuerlogik mit Steuerbefehlen enthält. Die Ausführung der Steuerlogik führt zu einer Steuerung des Hydromotors in Abhängigkeit der ermittelten aktuellen Drehzahl des Bohrantriebes.

Erfindungsgemäß ist der wenigstens eine Hydromotor des Bohrantriebes ein Hydromotor mit verstellbarem Schluckvolumen. Dabei ist das Schluckvolumen des Hydromotors elektrisch verstellbar, sodass durch entsprechende Steuersignale des Steuergerätes unmittelbar eine Anpassung des Schluckvolumens des Hydromotors erfolgen kann.

Auf diese Weise lässt sich unter anderem die Funktion eines aus dem Stand der Technik bekannten hydraulischen Druckreglers nachbilden. Darüber hinaus erlaubt die Steuerung der Motoren abhängig von der Drehzahl des Bohrantriebes einen stabilen Betrieb. Entspricht der aktuelle Schluckstrom des Bohrantriebes nicht dem Volumenstrom der Bohrhydraulik, wird das Schluckvolumen des Bohrantriebes zur Anpassung verringern, um die Divergenz zu minimieren. Durch diese Art der Verstellung wird ein stabilerer Betrieb des Gesamtsystems geschaffen.

Vorstellbar ist es ebenso, dass das Steuergerät wenigstens einen Signaleingang und/oder ein Erfassungsmittel aufweist, um den aktuellen Ist-Volumenstrom innerhalb der Bohrhydraulik zu bestimmen. Als Ist-Volumenstrom der Bohrhydraulik wird das dem Bohrantrieb zugeführte Hydraulikvolumen verstanden. Das Steuergerät könnte mit einem entsprechenden Ventilblock der Bohrhydraulik in Verbindung stehen, um an die erforderlichen hydraulischen Größen für die Bestimmung des Ist-Volumenstroms der Bohrhydraulik zu gelangen.

Vorstellbar ist es ebenso, dass das Steuergerät wenigstens einen Signaleingang und/oder ein Erfassungsmittel aufweist, um ein oder mehrere Motorbetriebsparameter eines Antriebsaggregates zu bestimmen, das die erforderlichen mechanische Antriebsenergie für den Betrieb ein oder mehrerer Hydraulikpumpen der Bohrhydraulik bereitstellt.

Auf Grundlage der vorgenannten Parameter des Antriebsaggregates und/oder des Ist-Volumenstroms ist das Steuergerät in der Lage, den aktuellen Arbeitspunkt der Bohrhydraulik zu ermitteln. Dies ermöglicht eine arbeitspunktabhängige Anpassung und Steuerung des Bohrantriebs, d.h. das Schluckvolumen des wenigstens einen Hydromotors wird in Abhängigkeit der aktuellen Drehzahl des Bohrantriebes sowie des aktuellen Arbeitspunktes verstellt.

Denkbar ist es ebenso, dass das Steuergerät konfiguriert ist, das aktuelle Drehmoment des Bohrantriebes zu erfassen. Vorstellbar ist auch eine Möglichkeit zur Begrenzung des Drehmomentes zu entsprechende Anpassung des Schluckvolumens.

Neben dem erfindungsgemäßen System betrifft die vorliegende Erfindung ebenso ein Bohrgerät für den Tiefbau mit wenigstens einem System gemäß der vorliegenden Anmeldung.

Die Vorteile und Eigenschaften des Bohrgerätes entsprechen offensichtlich denen des erfindungsgemäßen Systems, weshalb an dieser Stelle auf eine wiederholende Beschreibung verzichtet wird.

Weitere Vorteile und Eigenschaften der Erfindung sollen nachfolgend anhand eines in den Figuren dargestellten Ausführungsbeispiels näher erläutert werden.

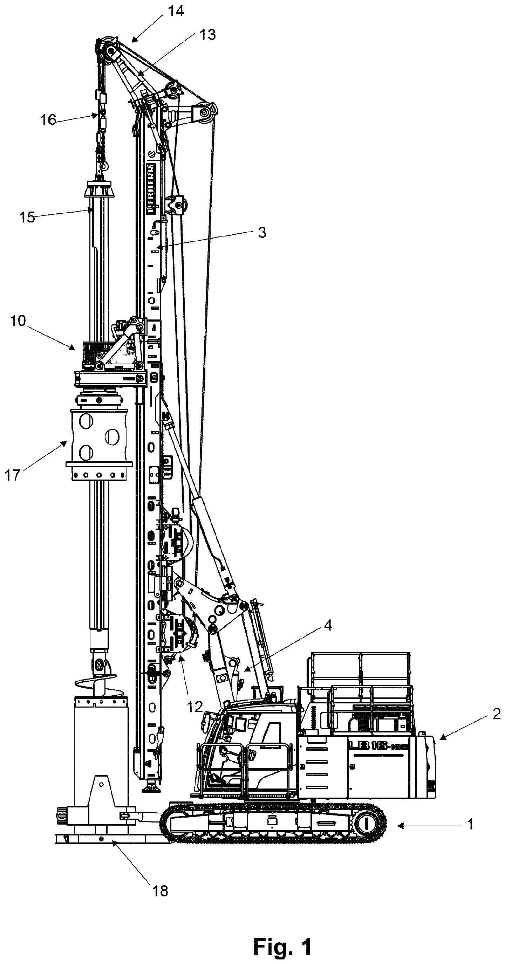

Die Darstellung in Figur 1 zeigt ein Kelly-Bohrgerät zum Eintreiben von Bohrpfählen in den Boden. Mittels einer als zusätzliches Anbaugerät aufgenommenen Verrohrungsmaschine 2 kann gleichzeitig in das gebohrte Loch ein Rohr eingebracht werden. Der Fokus der Erfindung liegt aber auf dem Bohrprozess bzw. dem Bohrantrieb.

Das Bohrgerät umfasst einen Unterwagen 1 mit Raupenantrieb, auf diesem ein Oberwagen 2 drehbar gelagert ist. Vom Oberwagen erstreckt sich der Mäkler 3, der mittels Verstellantrieb 4 verstellbar ist. Von einer Kellywinde 12 erstreckt sich ein Kellyseil 16 entlang des Rücken des Mäklers 3 bis zum Kellygalgen 14 des an der Spitze des Mäklers 3 angeordneten Hilfsgalgen 13. Das Kellyseil 16 ist an der obersten Kellystange 15 befestigt. Auf einem Schlitten 18, der in Vertikalrichtung am Mäkler 11 verfahrbar ist, sitzt ein Bohrantrieb 10 zum Antrieb eines Bohrers. Zwischen Bohrantrieb 10 und Bohrer werden die Kellystangen 15 als Antriebsverlängerung eingebracht. Das Druckrohr 17 drückt gleichzeitig auf ein in der Verrohrungsmaschine 18 eingespanntes Rohr.

Der Bohrantrieb 10 wird durch einen Hydraulikkreislauf der Maschine versorgt. Ein solcher Hydraulikkreislauf sitzt im Oberwagen 2 der Maschine und besteht im Wesentlichen aus ein oder mehreren Hydraulikpumpen, die durch das Antriebsaggregat der Maschine, bspw. einen Verbrennungsmotor angetrieben sind.

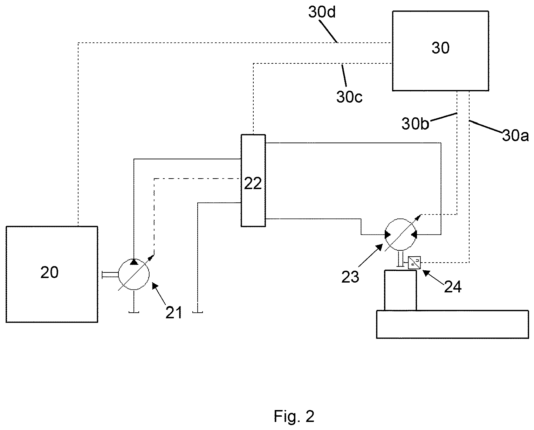

Ein vereinfachtes hydraulisches Schaubild des erfindungsgemäßen Systems zur Steuerung des Bohrantriebs 10 ist in Figur 2 dargestellt. Gezeigt ist das Antriebsaggregat 20, das über eine mechanische Kopplung wenigstens eine Hydraulikpumpe 21 der Bohrhydraulik antreibt. Die Pumpe 21 ist als Verstellpumpe ausgeführt, die über eine hydraulische Steuerleitung des Ventilblockes 22 verstellbar ist. Der von der Pumpe 21 erzeugte Volumenstrom strömt durch einen Ventilblock 22 zum Bohrantrieb 10 bzw. den wenigstens einen Hydromotor 23 des Bohrantriebes. Die Drehrichtung des Hydromotors 23 lässt sich umkehren, was durch die Ventilstellung des Ventilblockes 22 erreicht wird. Der Hydromotor 23 ist mechanisch über ein Bohrgetriebe mit dem Bohrwerkzeug verbunden.

Eine elektronische Steuereinheit 30 kommuniziert mit einem Drehzahlgeber 24 über die Signalleitung 30a. Der Geber 24 erfasst die Drehzahl n der Motorausgangswelle und stellt diese in Form eines elektrischen Signals über die Signalleitung 30a der Steuereinheit 30 zur Verfügung. Die Steuereinheit 30 weist wenigstens zwei weitere Signaleingänge 30c, 30d, wobei die Signalleitung 30c dazu dient, ein oder mehrere Parameter des Ventilblockes 22 an das Steuergerät zu übertragen. Dies umfasst bspw. den aktuellen, durch die Pumpe 21 gelieferten IST-Volumenstrom, der entweder unmittelbar erfasst und übertragen oder durch das Steuergerät anhand anderer vom Ventilblock empfangener Parameter bestimmt werden kann. Über den Signaleingang 30d hat die Steuereinheit zudem Zugriff auf Betriebsparameter des Antriebsaggregats, bspw. die Motordrehzahl, Moment oder sonstige Parameter.

Neben den Signaleingängen 30a, 30c, 30d umfasst die Steuereinheit 30 wenigstens einen Steuerausgang, über diesen das Steuergerät das aktuelle Schluckvolumen des Hydromotors 23 elektrisch verstellen kann. Gemäß der Erfindung kann dadurch der Hydromotor 23 durch die Steuereinheit 30 in Abhängigkeit des vom Sensor 24 übermittelten Drehzahlwertes n des Hydromotors 23 verstellt werden, wobei insbesondere das aktuelle Schluckvolumen des Hydromotors 23 durch die Steuereinheit 30 elektrisch verstellt wird. Durch die Realisierung wird damit nicht nur ein hydraulischer Druckregler nachgebildet, sondern die Steuerung des wenigstens einen Motors 23 wird abhängig von der Drehzahl des Bohrantriebes 10 durchgeführt. Entspricht der aktuelle Schluckstrom des Bohrantriebes 10 nicht dem Ist-Volumenstrom der Maschine, wird das Schluckvolumen des Hydromotors 23 verringert. Durch diese Art der Verstellung ergibt sich eine entsprechende Stabilität des Systems.

Durch eine elektrische Verstellung des wenigstens einen Antriebsmotors 23 ergibt sich ebenso die Möglichkeit, das aktuelle Drehmoment des Bohrantriebes 10 zu begrenzen, wobei selbstverständlich gleichzeitig eine Drehmomenterfassung möglich ist. In Summe kann ein stabileres Verhalten des Bohrantriebes erreicht werden, da insbesondere die Verstellparameter des Hydromotors 23 abhängig vom aktuellen Arbeitspunkt der Bohrhydraulik veränderbar sind.

## Patentansprüche

1. System zur Steuerung eines Bohrantriebs eines Spezialtiefbaugerätes umfassend wenigstens einen Hydromotor (23) als Bohrantrieb (10), der über eine Bohrhydraulik mit der benötigten hydraulischen Energie versorgt ist, sowie ein elektronisches Steuergerät (30),
**dadurch gekennzeichnet,**
**dass** das Steuergerät einen Signaleingang (30a) und/oder ein Erfassungsmittel (24) zur mittelbaren oder unmittelbaren Bestimmung der Drehzahl des Bohrantriebs und einen Programmspeicher mit gespeicherten Steuerbefehlen, die konfiguriert sind, den Hydromotor in Abhängigkeit der Drehzahl des Bohrantriebs anzusteuern, umfasst, wobei das Schluckvolumen des wenigstens einen Hydromotors durch das Steuergerät in Abhängigkeit der Drehzahl des Bohrantriebs elektrisch verstellbar ist.

2. System nach Anspruch 1, **dadurch gekennzeichnet, dass** der wenigstens eine Hydromotor ein Verstellmotor ist, der mit dem Steuergerät über eine elektrische Signalleitung zur Verstellung des Hydromotors verbunden ist.

3. System nach einem der vorstehenden Ansprüche, **dadurch gekennzeichnet, dass** das Steuergerät Signaleingänge und/oder Erfassungsmittel aufweist, um den Ist-Volumenstrom innerhalb der Bohrhydraulik zu bestimmen.

4. System nach einem der vorhergehenden Ansprüche, **dadurch gekennzeichnet, dass** das Steuergerät Signaleingänge und/oder Erfassungsmittel aufweist, um ein oder mehrere Motorbetriebsparameter eines Antriebsaggregats zum Antrieb wenigstens einer Hydraulikpumpe der Bohrhydraulik zu ermitteln.

5. System nach einem der vorstehenden Ansprüche 3 oder 4, **dadurch gekennzeichnet, dass** das Steuergerät konfiguriert ist, eine vom Arbeitspunkt der Bohrhydraulik abhängige Ansteuerung des Bohrantriebs, insbesondere Verstellung des Schluckvolumens des wenigstens einen Hydromotors vorzunehmen.

6. System nach einem der vorstehenden Ansprüche, **dadurch gekennzeichnet, dass** das Steuergerät konfiguriert ist, das aktuelle Drehmoment des Bohrantriebs zu erfassen und/oder zu begrenzen.

7. Bohrgerät für den Tiefbau mit wenigstens einem System gemäß einem der vorstehenden Ansprüche.

## Claims

1. A system for controlling a drilling drive of a specialist civil engineering machine comprising at least one hydraulic motor (23) as the drilling drive (10), which is supplied with the necessary hydraulic power via a drilling hydraulic system, and an electronic control unit (30),
**characterized in that**
the control unit comprises a signal input (30a) and/or a detection means (24) for indirectly or directly determining the speed of the drilling drive and a program memory with stored control commands, which are configured to control the hydraulic motor as a function of the speed of the drilling drive, the displacement of the at least one hydraulic motor being electrically adjustable by the control unit as a function of the speed of the drilling drive.

2. The system according to claim 1, **characterized in that** the at least one hydraulic motor is a variable-displacement motor which is connected to the control unit via an electrical signal line for adjustment of the hydraulic motor.

3. The system according to one of the preceding claims, **characterized in that** the control unit has signal inputs and/or detection means for determining the actual volume flow within the drilling hydraulic system.

4. The system according to one of the preceding claims, **characterized in that** the control unit has signal inputs and/or detection means for determining one or more motor operating parameters of a drive unit for driving at least one hydraulic pump of the drilling hydraulic system.

5. The system according to one of the preceding claims 3 or 4, **characterized in that** the control unit is configured to control the drilling drive, in particular to adjust the displacement of the at least one hydraulic motor, depending on the operating point of the drilling hydraulic system.

6. The system according to one of the preceding claims, **characterized in that** the control unit is configured to detect and/or to limit the current torque of the drilling drive.

7. A drilling machine for civil engineering comprising at least one system according to one of the preceding claims.

## Revendications

1. Système pour commander un entraînement de forage d'un appareil spécial de génie civil comprenant au moins un moteur hydraulique (23) en tant qu'entraînement de forage (10), qui est alimenté en l'énergie hydraulique requise par l'intermédiaire d'une installation hydraulique de forage, ainsi qu'au moins un appareil de commande (30) électronique,
**caractérisé en ce que**
l'appareil de commande comprend une entrée de signaux (30a) et/ou un moyen de détection (24) pour définir indirectement ou directement la vitesse de rotation de l'entraînement de forage et une mémoire de programmes avec des instructions de commande mémorisées, qui sont configurées pour piloter le moteur hydraulique en fonction de la vitesse de rotation de l'entraînement de forage, dans lequel le volume d'absorption de l'au moins un moteur hydraulique peut être réglé de manière électrique par l'appareil de commande en fonction de la vitesse de rotation de l'entraînement de forage.

2. Système selon la revendication 1, **caractérisé en ce que** l'au moins un moteur hydraulique est un moteur à cylindrée variable, qui est relié à l'appareil de commande par l'intermédiaire d'une ligne de signaux électrique pour régler le moteur hydraulique.

3. Système selon l'une quelconque des revendications précédentes, **caractérisé en ce que** l'appareil de commande présente des entrées de signaux et/ou des moyens de détection pour définir le débit volumique réel à l'intérieur de l'installation hydraulique de forage.

4. Système selon l'une quelconque des revendications précédentes, **caractérisé en ce que** l'appareil de commande présente des entrées de signaux et/ou des moyens de détection pour déterminer un ou plusieurs paramètres de fonctionnement de moteur d'un groupe d'entraînement pour l'entraînement d'au moins une pompe hydraulique de l'installation hydraulique de forage.

5. Système selon l'une quelconque des revendications 3 ou 4, **caractérisé en ce que** l'appareil de commande est configuré pour réaliser un pilotage de l'entraînement de forage indépendant du point de fonctionnement de l'installation hydraulique de forage, en particulier le réglage du volume d'absorption de l'au moins un moteur hydraulique.

6. Système selon l'une quelconque des revendications précédentes, **caractérisé en ce que** l'appareil de commande est configuré pour détecter et/ou limiter le couple de rotation instantané de l'entraînement de forage.

7. Appareil de forage pour le génie civil avec au moins un système selon l'une quelconque des revendications précédentes.
